Europäisches Patentamt

**European Patent Office**

Office européen des brevets

(19)

(11) Publication number : **0 271 946 B1**

(12) # EUROPEAN PATENT SPECIFICATION

(45) Date of publication of patent specification :
**24.08.94 Bulletin 94/34**

(51) Int. Cl.⁵ : **H04M 19/08**

(21) Application number : **87202393.2**

(22) Date of filing : **02.12.87**

(54) **Telecommunication device and circuits used therein.**

(30) Priority : **16.12.86 BE 2061110**

(43) Date of publication of application :
**22.06.88 Bulletin 88/25**

(45) Publication of the grant of the patent :
**24.08.94 Bulletin 94/34**

(84) Designated Contracting States :
**AT CH DE ES FR GB IT LI NL SE**

(56) References cited :
**EP-A- 0 154 366
BE-A- 905 921
FR-A- 2 373 200
GB-A- 2 115 653
NEW ELECTRONICS, vol. 18, no. 8, April 1985,
pages 145,147,149, London, GB;"Designing a
versatile telephone set - part II"**

(73) Proprietor : **ALCATEL N.V.
Strawinskylaan 537, (World Trade Center)
NL-1077 XX Amsterdam (NL)**

(72) Inventor : **Moons, Elve Desiderius Jozef
Vandermarckestraat 27
B-3920 Lummen (BE)**
Inventor : **Cannaerts, Jozef Dirck Guido Leonie
Baron de Celleslaan 75
B-2520 Edegem (DE)**

(74) Representative : **Vermeersch, Robert et al
BELL TELEPHONE MANUFACTURING
COMPANY
Naamloze Vennootschap
Patent Department
Francis Wellesplein 1
B-2018 Antwerpen (BE)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 271 946 B1

## Description

The present invention relates to a telecommunication device which is coupled via a line to an exchange supplying electric power to said line and which includes a transmitter circuit, a receiver circuit and a DC voltage regulation circuit, said receiver circuit including an amplifier circuit with an associated loudspeaker, and being coupled together with said transmitter circuit to said line through a hybrid circuit and said DC voltage regulation circuit regulating the DC voltage at a predetermined point of said line.

Such a telecommunication device is already known from the British patent application N° 84/6032, but therein no details are given about the way in which electric power is supplied to the amplifier circuit and the associated loudspeaker. Moreover is the DC voltage regulation circuit used therein of a relatively complex structure.

An object of the present invention is to provide a telecommunication device of the above type, but wherein the amplifier circuit and the associated loudspeaker are fed from the line without affecting the balance of the hybrid circuit and which while remaining simple performs an adequate DC line voltage regulation and ensures a relatively large voltage swing for the amplifier circuit with its associated loudspeaker.

According to the invention this object is achieved due to the fact that it includes a branch coupled between the conductors of said line and including the series connection of an output stage of said amplifier circuit and a current source constituted by the series connection of a first transistor and a current sensing resistance and forming part of said DC voltage regulation circuit which by controlling the current produced by said current source regulates the DC voltage at said predetermined point to which said branch is connected, said current source also forming part of an AC impedance synthesis circuit which synthesizes from said current sensing resistance an AC impedance constituting the impedance of said current source.

The current source by its high impedance prevents the balance of the hybrid circuit from being affected by the connection, between the line conductors, of the amplifier circuit and the associated loudspeaker. On the other hand, by its regulated current a simple DC voltage regulation is obtained. Thus the current source performs a dual function. Moreover, allows the sensing resistance simultaneously to achieve the required high impedance and to preserve a large voltage swing for the amplifier circuit and associated loudspeaker.

It is to be noted that British patent application GB-A-2 115 653 already discloses a telecommunication device in which a branch, coupled between the conductors of a telecommunication line, includes the series connection of a current source and an output stage of an amplifier circuit. However, the current source does not perform a DC line voltage regulation circuit. Indeed, this current source is constant so that any change in the line current has to flow through the branches not including this current source so giving rise to a proportional change in the DC line voltage contrary to the above object.

The above mentioned and other objects and features of the invention will become more apparent and the invention itself will be best understood by referring to the following description of an embodiment taken in conjunction with the accompanying drawings which shows a telecommunication device according to the invention.

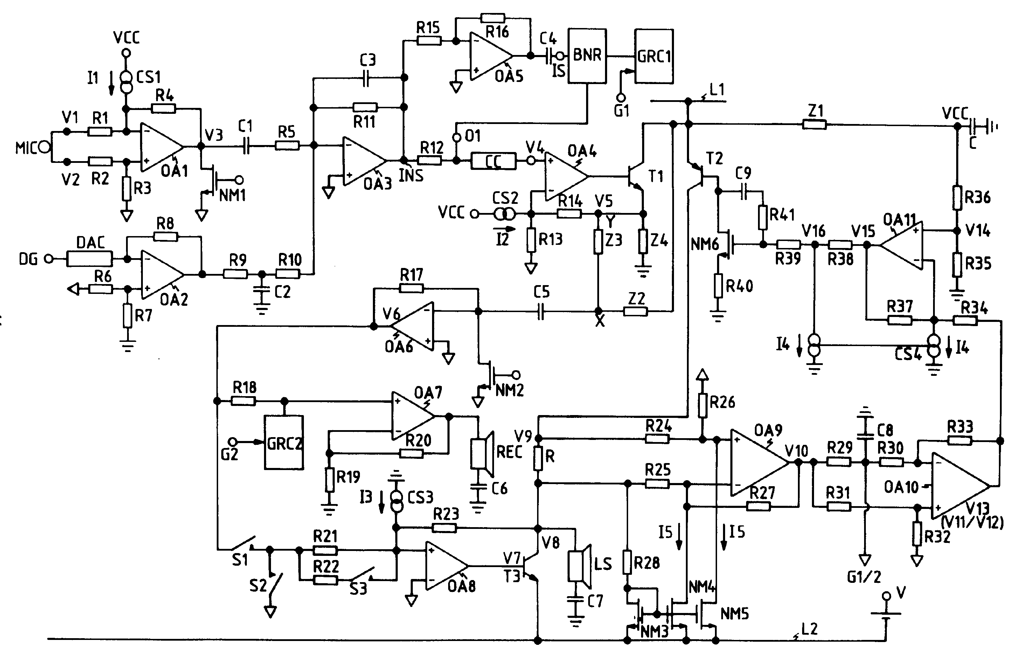

This telecommunication device has line terminals L1 and L2 which are coupled via a telecommunication line and a set of other circuits to an exchange which supplies electric power to this line. These circuits (not shown) include a polarity bridge, an overvoltage protection circuit, an overcurrent protection circuit, etc. The telecommunication device operates with supply voltages V and VCC : V is a reference voltage source of 0.8 Volts whose negative pole is connected to line terminal L2 and VCC is the DC voltage which is generated at the like named junction point of an impedance Z1 and a capacitor C. To simplify the drawing line terminal L2 is represented by the usual ground symbol and V is represented by a triangle. To be noted that V is derived from the electric power supplied by the exchange in a so-called bandgap reference circuit which is well-known in the art and therefore not shown.

The telecommunication device includes a hybrid circuit which is constituted by a Wheatstone bridge having terminals L2 (ground), L1, X and Y which are interconnected by the impedances C, Z1; Z2; Z3 and Z4 respectively, C being a short-circuit for speech signals. A transmit path has an output constituted by operational amplifier OA4 and NPN transistor T1 which is coupled across the bridge terminals L1 and Y, whilst a receive path having an input constituted by an operational amplifier OA6 is coupled across bridge terminals L2 and X. The bridge impedance Z1, C is further shunted by the line impedance and by a branch comprising the series connection of PNP transistor T2, sensing resistor R and NPN transistor T3. Transistor T2 and resistor R form part of a DC voltage regulation circuit and of an AC impedance synthesis circuit, whilst transistor T3 is an output circuit of the receive path.

The transmit path is used for transmitting speech and selection tone signals on the line L1, L2 and to this end it couples an electrodynamic microphone MIC as well as the output DG of a digital tone generator (not shown) to the base of the above mentioned transistor T1. The receive path is used for receiving speech signals from the line L1, L2 and therefore it couples this line via the above mentioned amplifier OA6 with a telephone receiver REC as well as with a loudspeaker LS. Finally, the DC voltage regulation circuit maintains the DC voltage VCC substantially constant, whilst the AC impedance synthesis circuit makes the AC impedance of the branch including T2 and R and via which T3 and LS are fed so high that it does not affect the values of the bridge impedances and that this loudspeaker LS is fed from a current source T2, R.

The hybrid circuit avoids microphone signals from being supplied to the receiver and operates as follows : the impedances Z1 to Z4 and the line impedance connected in parallel with Z1 form a Wheatstone bridge circuit with the transmit amplifier OA4 constituting the driving source and the received amplifier OA6 constituting the nulling amplifier. If the bridge is balanced then the output of the receive amplifier will be zero for any signal being transmitted and any signal supplied via the line L1, L2 will be received at the input of the receive amplifier. Unwanted return signals are eliminated, thereby providing the two-to-four wire conversion of the hybrid circuit.

The transmit path, the receive path and the DC voltage regulation and AC impedance synthesis circuit are successively considered hereinafter.

The Transmit Path

The electrodynamic microphone MIC is connected across the inputs of a differential amplifier circuit comprising operational amplifier OA1 to which resistances R1 to R4 and a constant current source CS1 providing a constant current I1 are connected in the way shown.

When calling V1-V2 the differential voltage provided by the microphone MIC and when R1=R2 and R3=R4, the output voltage V3 of OA1 may be written :

$$V3 = V - R4I1 - \frac{R3}{R1}(V1 - V2) \quad (1)$$

Thus the current source CS1 shifts the DC level from V (without CS1) to V-R4I1. This is done to prevent saturation of OA1 i.e. to permit a sufficient voltage swing to be produced on the amplifier output.

The amplifier circuit just described further includes NMOS transistor NM1 which is connected between the output of OA1 and V and which is operated to mute the output signal of OA1 when a suitable control signal is applied to its gate. The output V3 of OA1 is connected to the inverting input of operational amplifier OA3 through DC blocking capacitor C1 and resistance R5 in series.

The output DG of the above mentioned digital tone generator which generates selection tone signals is coupled through a digital-to-analog converter DAC to the inverting input of am amplifier circuit which comprises operational amplifier OA2 to which resistances R6 and R8 are connected in the way shown. In a preferred embodiment R6 is equal to R7 and to R8. The output of OA2 on which tone signals are generated is connected to the inverting input of operational amplifier OA3 through a filter circuit comprising series resistances R9 and R10 and shunt capacitor C2 connected between R9 and R10, at the one end, and ground at the other end. This filter serves for removing higher harmonics from the tone signals applied to it.

The output of operational amplifier OA3 whose non-inverting input is connected to V is coupled back to its inverting input through a filter circuit comprising resistance R11 and capacitor C3 in parallel. The purpose of this filter C3, R11 is also to remove high harmonics from the voice frequency selection signals applied to it.

The output INS of operational amplifier OA3 is also connected through resistance R12 and voltage attenuator circuit CC in series to the non-inverting input V4 of operation amplifier OA4 whose output controls the base of the above mentioned NPN transistor T1. The inverting input of OA4 is connected to the junction point of a constant current source CS2, providing from VCC a constant current I2, and the one ends of resistances R13 and R14 whose other ends are connected to V and to the bridge terminal Y, i.e. to the junction point of T1, Z3 and Z4, respectively. When calling V4 the voltage applied to the like named non-inverting input V4 of OA4 the voltage V5 at the bridge terminal Y, may be written :

$$V5 = V4\frac{R13 + R14}{R13} - V\frac{R14}{R13} - R14.I2 \quad (2)$$

Thus the current source CS2 shifts the DC level at the bridge terminal Y downwardly, so that a predetermined current equal to $\frac{V5}{Z4}$ flows through Z4 and transistor T1.

In a preferred embodiment $R13 = \frac{2R14}{3}$.

The purpose of the voltage attenuator circuit CC is to attenuate in a gradual way the signals applied thereat which exceed a positive or a negative level. Such an attenuator circuit is for instance of the type described in the copending patent BE-A-905 922 of even date and entitled "Voltage Attenuation Circuit" (J. Cannaerts 3).

The signal output INS of operational amplifier OA3 is also connected through the series connection of an amplifier circuit and a DC blocking capacitor C4 to the input of a background noise reduction circuit BNR another terminal of which is connected to the junction point O1 of R12 and CC. The amplifier circuit includes operational amplifier OA5 and resistances R15 and R16 connected therewith in the manner shown. The output of BNR is connected to a gain regulator circuit GRC1 which is further controlled by a reference signal G1 provided by the DC voltage regulation and AC impedance synthesis circuits and which is function of the line current.

The purpose of the background noise reductor circuit BNR is to attenuate the signal applied to the circuit CC if this signal is comprised between predetermined positive or negative thresholds.

The aim of the gain regulator circuit GRC1 is to regulate the gain of the signal supplied to it in function of the reference signal, i.e. of the line current, applied to it.

The background noise reductor circuit BNR and the gain regulator circuit GRC1 are for instance of the type disclosed in the Belgian patents Nos 905 925 and 905 924 entitled "Telecommunication circuit" (E. Moons et al 5-5) and "Gain control circuit" (E. Moons et al 4) respectively. The gain regulator circuit GRC1 may also be of the type described in the Belgian patent No 905 923 entitled "Impedance network" (J. Cannaerts 4).

The Receive Path

As already mentioned above, this path includes the operational amplifier OA6 to the inverting input of which bridge terminal X is connected through DC blocking capacitor C5. The non-inverting input of OA6 is connected to reference voltage V and its output is connected to its inverting input through feedback resistance R17. The inverting input is further connected to V through NMOS transistor NM2 so that OA6 is muted when a suitable control voltage is applied to the gate of NM2. The output V6 of operational amplifier OA6 is connected to telephone receiver REC and to loudspeaker LS via respective ones of two parallel branches. The first of these branches includes a resistance R18 which is connected to a gain regulator circuit GRC2, as well as to ground via a non-inverting amplifer circuit, telephone receiver REC and capacitor C6 in series. GRC2 is of the same type as GRC1 and has a control input G2 which is the same as G1. This amplifier circuit includes operational amplifier OA7 to which resistances R19 and R20 are connected in the way shown. In a preferred embodiment R19 is equal to R20.

The second of the above mentioned branches includes a series switch S1 and a shunt switch S2 connected to V, the junction point of these switches being connected to the non-inverting input of operational amplifier OA8 via a resistance R21 in parallel with the series connection of resistance R22 and switch S3. The switches S1 to S3 are only schematically represented and are in fact electronic switches. The inverting input of OA8 is connected to V and ground is connected to its non-inverting input through constant current source CS3, providing a constant current I3. The output V7 of OA8 controls the base of NPN transistor T3 whose collector is connected to the non-inverting input of OA8 through resistance R23, and to ground via loudspeaker LS and capacitor C7 in series.

When calling V6 the input voltage applied to R21 the voltage V8 applied to loudspeaker LS may be written, in case switch S3 is open :

$$V8 = -\frac{R2}{R21} V6 + V(1 + \frac{R23}{R21}) + R23.I3 \quad (3)$$

Thus, by making use of the constant current source CS3 one realises a DC level shift of R23.I3 which is required in order that a sufficiently high signal could be applied to the loudspeaker LS.

By closing switch S2 the input voltage V6 may be made equal to V and by closing S3, resistance R22 is connected in parallel with resistance R23 due to which V8 increases.

It should be noted that the amplifier circuit including the operational amplifier OA8 and whose output stage T3 is connected in parallel with the series connection of loudspeaker LS and capacitor C7, is a class A amplifier which is fed from the line via a current source. The latter is constituted by PNP transistor T2 and resistance R in series, such as will be explained in detail later. By the high impedance of this source the balance of the hybrid circuit is not disturbed by the connection between the line conductors L1 and L2 of transistor T3 and loudspeaker LS. An NPN transistor T3 instead of a PNP transistor is used as a control element for the loudspeaker LS because in this way a larger voltage swing is possible at a collector which is connected to the loudspeaker.

Such as is also the case in the above first mentioned British patent application the device shown also includes a DC voltage regulation circuit to regulate the DC voltage VCC at the like named connection point of impedance Z1 and capacitor C in function of a reference DC voltage V11 which is itself dependent on the DC current supplied to the line L1, L2 from the exchange. This regulation circuit makes use of the same branch as the one via which T3 and LS are fed from the line. Indeed, it mainly includes impedance Z1, voltage divider R35, R36, comparator circuit OAll, inverter NM6 and PNP transistor T2. This circuit moreover includes current sensing resistance R and amplifiers OA9 and OA10 coupled therewith, OA10 supplying the above reference DC voltage which is function of the line DC current to the comparator circuit OA11.

It should be noted that the choice of NPN transistor T3 as a control element of loudspeaker LS has led to the use of PNP transistor T2 in the DC voltage regulator circuit because in this way a larger voltage swing is possible on the collector of this transistor.

The above mentioned current sensing resistance R is relatively small in order that the voltage drop produced therein by the DC current should not be too high. However, because the branch T2, R has to constitute a current source an AC impedance synthesis circuit is used to synthesize a high AC impedance from resistance R. This circuit also makes use of the elements R, OA9, OA10, OA11, NM6 and T2.

Because the DC voltage regulation circuit and the AC impedance synthesis circuit mainly use the same elements they are described together hereinafter.

## The DC Voltage Regulation Circuit and AC Impedance Synthesis Circuit

As already mentioned above, these circuits include the branch comprising the series connection of PNP transistor T2 and sensing resistance R. The voltage drop across the sensing resistance R is sensed by means of a sensing differential amplifier circuit comprising operational amplifier OA9 to which resistances R24 to R27 are connected in the way shown. The junction point V8 of the resistances R and R25 is connected to ground via resistance R28 and diode connected NMOS transistor NM3 which together constitute a constant current source. This constant current source is coupled to the current mirror NMOS transistors NM4 and NM5 which derive a constant current I5 from both the inputs of OA9. When calling V9-V8 the voltage sensed across resistance R and when R24=R25 and R26=R27, the output voltage V10 of OA9 may be written :

$$V10 = V + \frac{R26}{R24}(V9 - V8) \quad (4)$$

Because V9-V8 = R(I+i) wherein I is the DC current and i is the AC current flowing through the sensing resistance R, the output voltage V10 is proportional to these currents and may be written :

$$V110 = V + \frac{R26}{R24}RI + \frac{R26}{R24}Ri = V + AI + Ai \quad (5)$$

wherein

$$A = \frac{R26}{R24}R \quad (6)$$

To be noted that the current source NM3, R28 and the current mirrors NM4, NM5 are used in order to decrease the DC bias voltage on each of the inputs of OA9.

The output V10 of operational amplifier OA9 is connected to an amplifier circuit which comprises operational amplifier OA10 to which resistances R29 to R33 and capacitor C8 are connected in the way shown. This amplifier provides an amplification which is different for the AC and DC parts of the output voltage signal V10 applied to its input because capacitor C8 constitutes a short-circuit for AC signals.

The DC part V+AI of the voltage signal V10 is amplified such that the output signal V11 is obtained. This signal may be written :

$$V11 = \frac{AI\,[R32(R29+R30) - R31.R33]}{(R29+R30)(R31+R32)} + V \quad (7)$$

In a preferred embodiment :

$$R29 + R30 = \frac{R31 + R32}{2} = R33 \text{ and } R31 < > R32 \quad (8)$$

so that

$$V11 = \frac{AI\,(R32 - R31)}{2\,R33} + V \quad (9)$$

The AC part Ai of the voltage signal V10 is amplified such that the output signal V12 is obtained. This signal may be written :

$$V12 = \frac{Ai.R32}{R31 + R32} \cdot \frac{R30 + R33}{R30} \quad (10)$$

Or, when the relations (8) are satisfied :

$$V12 = \frac{AiR32}{2\,R33} \cdot \frac{R30 + R33}{R30} \quad (11)$$

so that the AC amplification factor of i is larger than the DC amplification factor of I.

The output DC/AC voltage V11+V12 or V13 produced at the output of operational amplifier OA10 is applied via resistance R34 as a reference voltage to the inverting input of operational amplifier OA11 whose non-inverting input is connected to a tapping point of a voltage divider which is constituted by resistances R35 and R36 connected between ground, on the one hand, and the junction point VCC of Z1 and C, on the other hand. The output of OA11 is connected to its inverting input via feedback resistance R37 and this inverting input is further connected to ground through a constant current source CS4 providing a constant current I4. The output of OA11 is connected to the gate electrode of NMOS transistor NM6 through the series connected resistances R38 and R39 whose junction point is connected to ground through a schematically represented current mirror circuit which is coupled with current source CS4. The drain-to-source path of NM6 is connected in series with source resistance R40 between the base of PNP transistor T2 and ground. A compensation circuit comprising capacitor C9 and resistance R41 is connected between the drain and gate electrodes of NM6.

When the above DC/AC signal V13 is applied to operational amplifer OA11 via resistance R34 and when calling V14 the voltage at the junction point of the voltage divider resistances R35 and R36, the output voltage V15 of OA11 may be written :

$$V15 = -\frac{R37}{R34}V13 + (1 + \frac{R37}{R34})V14 + R37.I4 \quad (12)$$

wherein R37.I4 is the DC voltage shift produced by CS4.

This voltage V15 controls the gate of NMOS transistor NM6 through the series connected resistances R38 and R39. Because the current I4 is derived to ground between resistances R38 and R39 and resistance R38 is equal to R37, the voltage V16 at the junction point of R38 and R39 is given by :

$$V16 = -\frac{R37}{R34}V13 + (1 + \frac{R37}{R34})V14 \quad (13)$$

When the voltage V16 supplied to the gate of transistor NM6 increases/decreases it is clear that the base current of transistor T2 then also increases/decreases, so that the emitter and collector currents of this transistor T2 then also increase/decrease.

First the DC voltage regulation is considered, V13 being then equal to V11. The purpose of this DC voltage regulation is to regulate VCC in such a way that it remains constant for a constant DC line current and slightly increases/decreases whens the DC line current increases/decreases. In this connection, it should be noted that the above mentioned DC current I is equal to the DC line current less a substantially constant DC current which is equal to the sum of the DC currents flowing in the branches including the elements T1, Z2 and Z1 respectively.

The voltage VCC remains constant for a constant DC line current. Indeed, when for one or other reason the DC line current part flowing through Z1, R36, R35 would increase/decrease, and thus give rise to an increase/decrease of VCC, due to a decrease/increase of the DC line current part flowing through T2, R, T3, then the latter DC current would automatically increase/decrease since the increase/decrease of VCC provokes an increase/decrease of V14, as

$$V14 = \frac{R35}{R35 + R36} VCC \quad (14)$$

and this leads to an increase/decrease of the DC current flowing through T2.

The voltage VCC slightly increases/decreases when the DC line current increases/decreases because, when this happens, also the DC current I increases/decreases and gives rise to an increase/decrease of the reference voltage V11, the voltage V14 being equal to V11 and proportional to VCC.

A high AC impedance is obtained by synthesis from the sensing resistance R in the following way.

As mentioned above, for AC signals one has V13=V12, and because both the ends of the voltage divider R35, R36 are grounded from an AC viewpoint, the voltage V14 is zero so that the above relation (13) then becomes :

$$V16 = -\frac{R37}{R34} V12 \quad (15)$$

As follows from the relations (6), (10) and (15) the AC voltage Ri measured on the resistance R is transformed into a voltage

$$V16 = -\frac{R26.R32.R37(R30 + R33)}{R24.R30.R34(R31 + R32)} Ri \quad (16)$$

or

$$V16 = -B.Ri \quad (17)$$

As this voltage is applied to the gate of transistor NM6 it is converted therein into a drain current which constitutes the base current of transistor T2. The latter current is then converted into a collector current. When calling D, the total voltage-to-current amplification of NM6 and T2, it follows from the above that by the loop including OA9, OA10, OA11, NM6, T2 the current i is converted into a current

$$-B.D.Ri \quad (18)$$

so that the total collector resistance of transistor T2 becomes

$$R(1 + BD) \quad (19)$$

This means that a high AC impedance has been synthesized from the resistance R.

From the above it also follows that the amplifier OA8, T3, LS is a class A amplifier which is fed from the line through a constant current source constituted by R and the loop OA9, OA10, OA11, NM6, T2.

To be noted that the DC voltage produced at the junction point of R29, R30 and C8 is used as the above mentioned reference voltage G1/2 for the gain regulator circuits GRC1 and GRC2. This voltage V17 is given by

$$V17 = V + E.I \quad (20)$$

when the relations (8) are satisfied, E being a constant.

## Claims

1. Telecommunication device which is coupled via a line (L1, L2) to an exchange supplying electric power to said line and which includes a transmitter circuit (OA1/2/3, T1), a receiver circuit (OA6/7/8, T3, REC, LS) and a DC voltage regulation circuit, said receiver circuit (OA6/7/8, T3, REC, LS) including an amplifier circuit (OA8, T3) with an associated loudspeaker (LS), and being coupled together with said transmitter circuit to said line (L1, L2) through a hybrid circuit (Z1-4) and said DC voltage regulation circuit (OA9/10/11, Z1, NM6, T2) regulating the DC voltage at a predetermined point of said line, characterized in that it includes a branch (T3, T2, R) coupled between the conductors of said line (L1, L2) and including the series connection of an output stage (T3) of said amplifier circuit (OA8, T3) and a current source (T2, R) constituted by the series connection of a first transistor (T2) and a current sensing resistance (R) and forming part of said DC voltage regulation circuit which by controlling the current produced by said current source (T2, R) regulates the DC voltage at said predetermined point to which said branch (T3, T2, R) is connected, said current source (T2, R) also forming part of an AC impedance synthesis circuit (OA9/10/11, NM6) which synthesizes from said current sensing resistance (R) an AC impedance constituting the impedance of said current source (T2, R).

2. Telecommunication device according to claim 1, characteritzed in that the series connection of said loudspeaker (LS) and a first capacitance (C7) is connected in parallel across said output stage (T3), and that said amplifier circuit (OA8, T3) includes a first operational amplifier (OA2) whose output is connected to the control input of a second transistor (T3) which constitutes said output stage and the output path of which is connected in parallel with said loudspeaker (LS) and said first capacitance (C7).

3. Telecommunication device according to claim 2, characterized in that said first and second transistors are a PNP transistor (T2) and an NPN transistor (T3) respectively.

4. Telecommunication device according to claim 1, characterized in that said DC voltage regulation circuit (OA9/10/11, Z1, NM6) further includes : a second branch (Z1, C) which is coupled in parallel with said first mentioned branch (T3, R, T2) and comprises the series connection of a first impedance (Z1) and a second capacitance (C), first means (OA9/10) which are coupled with said current sensing resistance (R) and are able to derive from the sensed line current a DC reference voltage (V11) in function of which said DC voltage is regulated, and a comparator circuit (DA1) of which the first input is coupled with the junction point (VCC) of said first impedance (Z1) and said second capacitance (C), of which the second input is connected to the output of said first means (OA9/10), and of which the output (V15) is coupled to a control input of said second transistor (T2).

5. Telecommunication device according to claim 4, characterized in that said second capacitance (C) is connected in parallel with a resistive voltage divider (R36, R35) a tapping point (V14) of which constitutes said second input of said comparator circuit (OA11).

6. Telecommunication device according to claim 1, characterized in that said AC impedance synthesis circuit (OA9/10/11, NM6) includes second means (OA9/10) which are coupled between said sensing resistance (R) and said first transistor (T2) and are able to derive from the sensed line current an AC regulation voltage (V12), the output (V12) of said second means (OA9/10) being coupled with a control input of said first transistor (T2).

7. Telecommunication device according to claims 4 and 6, characterized in that said first (OA9/10) and second (OA9/10) means are common to said DC voltage regulation circuit (OA9/10/11, Z1, NM6) and to said AC impedance synthesis circuit (OA9/10/11, NM6) and are constituted by the series connection of a sensing second amplifier circuit (OA9) which is coupled with said sensing resistance (R) and which provides at its output the DC/AC voltage (V10) measured across said sensing resistance (R) and by a third amplifier circuit (OA10) which provides said DC reference voltage (V11) and said AC regulation voltage (V12) at its output (V11, V12), the amplification of said DC reference voltage (V11) and of said AC regulation voltage (V12) being different.

8. Telecommunication device according to claim 7, characterized in that the output (V11, V12) of said first and second means is coupled to the control input of said second transistor (T3) via said comparator circuit (OA11) and an inverter circuit (NM6).

9. Telecommunication device according to claim 8, characterized in that said inverter circuit is constituted by an NMOS third transistor (NM6) whose drain-to-source path is coupled between the control input of said second transistor (T3) and the other conductor (L2) of said line (L1, L2).

10. Telecommunication device according to claim 8, characterized in that said third amplifier circuit (OA10) includes a second operational amplifier (OA10) to the inverting and non-inverting inputs of which the output of said second amplifier circuit (OA9) is coupled via the parallel connection of a series circuit comprising a first (R29) and a second (R30) resistance and of a third resistance (R31), the junction point of said first (R29) and second (R30) resistances being connected to the other conductor (L2) of said line through a third capacitance (C8), and that of the non-inverting input of said second operational amplifier is connected to a second reference voltage (V) through a fourth resistance (R32), whilst its inverting input is connected to its output through a fifth resistance (R33).

11. Telecommunication device according to claim 1, characterized in that said transmitter circuit (MC, DG, OA1/2/3/4) includes an electrodynamic microphone (MIC) and a tone generator (DG) which are coupled through respective fourth (OA1) and fifth (OA2) amplifier circuits to the inverting input of a third operational amplifier (OA3) having a feedback circuit constituted by a first filter circuit (C3, R11).

12. Telecommunication device according to claim 11, characterized in that said fifth amplifier circuit (OA2) is coupled to said inverting input of said third operational amplifier (OA3) through a second filter circuit (R9/10, C2).

**Patentansprüche**

1. Fernmeldegerät, das über eine Leitung (L1, L2) mit einer Zentrale verbunden ist, welche die Leitung mit elektrischer Energie versorgt, das Fernmeldegerät enthält eine Senderschaltung (OA1/2/3, T1), eine Empfängerschaltung (OA6/7/8, T3, REC, LS) und eine DC-Spannungsregelungsschaltung, wobei die Empfängerschaltung (OA6/7/8, T3, REC, LS) eine Verstärkerschaltung (OA8, T3) mit einem zugehörigen Lautsprecher (LS) enthält und zusammen mit der Senderschaltung mit der Leitung (L1, L2) über eine Hybridschaltung (Z1-4) verbunden ist, die DC-Spannungsregelungsschaltung (OA9/10/11, Z1, NM6, T2) regelt die Gleichspannung an einem vorgegebenen Punkt der Leitung, das Fernmeldegerät ist dadurch gekennzeichnet, daß es eine Abzweigleitung (T3, T2, R) enthält, die zwischen die Leiter der Leitung (L1, L2) geschaltet ist und die Reihenschaltung einer Ausgangsstufe (T3) der Verstärkerschaltung (OA8, T3) und einer Stromquelle (T2, R) umfaßt, wobei die Stromquelle durch die Reihenschaltung eines ersten Transistors (T2) und eines Strommeßwiderstandes (R) besteht, und einen Teil der DC-Spannungsregelungsschaltung bildet, welche durch die Steuerung des Stromes, der durch die Stromquelle (T2, R) erzeugt wird, die Gleichspannung an einem vorgegebenen Punkt regelt, mit dem die Abzweigleitung (T3, T2, R) verbunden ist, die Stromquelle (T2, R) bildet auch einen Teil einer Schaltung zur Erzeugung einer AC-Impedanz (OA9/10/11, NM6), welche aus dem Strommeßwiderstand (R) eine AC-Impedanz erzeugt, die die Impedanz der Stromquelle (T2, R) bildet.

2. Fernmeldegerät nach Anspruch 1, dadurch gekennzeichnet, daß die Reihenschaltung des Lautsprechers (LS) und einer ersten Kapazität (C7) zu der Ausgangsstufe (T3) Parallelgeschaltet wird und daß die Verstärkerschaltung (OA8, T3) einen ersten Operationsverstärker (OA2) enthält, dessen Ausgang mit dem Steuereingang eines zweiten Transistors (T3) verbunden ist, welcher die Ausgangsstufe bildet und dessen Ausgangsleitung parallel zu dem Lautsprecher und der ersten Kapazität (C7) geschaltet ist.

3. Fernmeldegerät nach Anspruch 2, dadurch gekennzeichnet, daß der erste und der zweite Transistor ein pnp-Transistor (T2) beziehungsweise ein npn-Transistor ist.

4. Fernmeldegerät nach Anspruch 1, dadurch gekennzeichnet, daß die DC-Spannungsregelungsschaltung (OA9/10/11, Z1, NM6) weiterhin umfaßt: eine zweite Abzweigleitung (Z1, C), die parallel zur zuerst erwähnten Abzweigleitung (T3, R, T2) geschaltet ist und die die Reihenschaltung einer ersten Impedanz (Z1) und einer zweiten Kapazität (C) enthält, erste Mittel (OA9/10), die mit dem Strommeßwiderstand (R) verbunden sind und die aus dem erfaßten Leitungsstrom eine DC-Referenzspannung (V11) ableiten können, in deren Abhängigkeit die Gleichspannung geregelt wird sowie eine Komparatorschaltung (OA11), deren erster Eingang mit dem Verbindungspunkt (VCC) der ersten Impedanz (Z1) mit der zweiten Kapazität (C) verbunden ist, deren zweiter Eingang mit dem Ausgang der ersten Mittel (OA9/10) verbunden ist und deren Ausgang (V15) mit dem Steuereingang des zweiten Transistors (T2) verbunden ist.

5. Fernmeldegerät nach Anspruch 4, dadurch gekennzeichnet, daß die zweite Kapazität (C) zu einem Widerstandsspannungsteiler (R35, R36) parallelgeschaltet ist, von dem ein Abgriffspunkt (V14) den zweiten Eingang der Komparatorschaltung (OA11) bildet.

6. Fernmeldegerät nach Anspruch 1, dadurch gekennzeichnet, daß die Schaltung zur Erzeugung einer AC-Impedanz (OA9/10/11, NM6) zweite Mittel (OA9/10) enthält, welche zwischen den Strommeßwiderstand (R) und den ersten Transistor (T2) geschaltet sind und die in der Lage sind, aus dem erfaßten Leitungsstrom eine AC-Regelspannung (V12) abzuleiten, wobei der Ausgang (V12) dieser zweiten Mittel (OA9/10) an einen Steuereingang des ersten Transistors (T2) gekoppelt wird.

7. Fernmeldegerät nach den Ansprüchen 4 und 6, dadurch gekennzeichnet, daß die ersten (OA9/10) und zweiten (OA9/10) Mittel für die DC-Spannungsregelungsschaltung (OA9/1011, Z1, NM6) und für die Schaltung zur Erzeugung einer AC-Impedanz (OA9/10/11, NM6) gleich sind und aus einer Reihenschaltung einer messenden zweiten Verstärkerschaltung (OA9) und einer dritten Verstärkerschaltung (OA10) bestehen, wobei die messende Verstärkerschaltung (OA9) mit dem Strommeßwiderstand (R) verbunden ist und an ihrem Ausgang die DC/AC-Spannung (V10) bereitstellt, welche über dem Meßwiderstand (R) gemessen wird, wobei die dritte Verstärkerschaltung (OA10) die DC-Referenzspannung (V11) und die AC-Regelspannung (V12) an ihrem Ausgang (V11, V12) bereitstellt und wobei die Verstärkungen der DC-Referenzspannung (V11) und der AC-Regelspannung (V12) unterschiedlich sind.

8. Fernmeldegerät nach Anspruch 7, dadurch gekennzeichnet, daß der Ausgang (V11, V12) der ersten und zweiten Mittel mit dem Steuereingang des zweiten Transistors (T3) über die Komparatorschaltung (OA11) und die Inverterschaltung (NM6) verbunden ist.

9. Fernmeldegerät nach Anspruch 8, dadurch gekennzeichnet, daß die Inverterschaltung durch einen dritten NMOS-Transistor (NM6) gebildet wird, dessen Drain-Source-Strecke zwischen den Steuereingang des zweiten Transistors (T3) und den anderen Leiter (L2) der Leitung (L1, L2) geschaltet wird.

10. Fernmeldegerät nach Anspruch 8, dadurch gekennzeichnet, daß die dritte Verstärkerschaltung (OA10) einen zweiten Operationsverstärker (OA10) enthält, mit dessen invertierendem und nicht-invertierendem Eingang der Ausgang des zweiten Verstärkers (OA9) über eine Zwischenschaltung verbunden ist, wobei diese Zwischenschaltung aus einer Parallelschaltung besteht, deren einer Zweig eine Reihenschaltung eines ersten (R29) und eines zweiten (R30) und eines dritten (R31) Widerstandes umfaßt, der Verbindungspunkt des ersten (R29) und des zweiten (R30) Widerstandes ist mit dem anderen Leiter (L2) über eine dritte Kapazität (C8) verbunden, und der nicht-invertierende Eingang des zweiten Operationsverstärkers ist über einen vierten Widerstand (R32) mit einer zweiten Referenzspannung (V) verbunden, während dessen invertierender Eingang über einen fünften Widerstand (R33) mit seinem Ausgang verbunden ist.

11. Fernmeldegerät nach Anspruch 1, dadurch gekennzeichnet, daß die Senderschaltung (MC, DG, OA1/2/3/4) ein elektrodynamisches Mikrofon (MIC) und einen Tongenerator (DG) enthält, die über zugehörige vierte (OA1) und fünfte (OA2) Verstärkerschaltungen mit dem invertierenden Eingang eines dritten Operationsverstärkers verbunden sind, der eine Rückkopplungsschaltung besitzt, die aus einem ersten Filter (C3, R11) besteht.

12. Fernmeldegerät nach Anspruch 11, dadurch gekennzeichnet, daß die fünfte Verstärkerschaltung (OA2) über eine zweite Filterschaltung (R9/10, C2) mit dem invertierenden Eingang des dritten Operationsverstärkers (OA3) verbunden ist.

**Revendications**

1. Dispositif de télécommunication qui est couplé, par l'intermédiaire d'une ligne (L1, L2), à un central fournissant l'énergie électrique à ladite ligne et qui comporte un circuit émetteur (OA1/2/3, T1), un circuit récepteur (OA6/7/8, T3, REC, LS) et un circuit de régulation de la tension continue, ledit circuit récepteur (OA6/6/7/8, T3, REC, LS) comprenant un circuit amplificateur (OA8, T3) avec un haut-parleur associé (LS) et étant couplé, en même temps que ledit circuit émetteur, à ladite ligne (L1, L2) par l'intermédiaire d'un circuit hybride (Z1-4) et ledit circuit (OA9/10/11, Z1, NM6, T2) de régulation de la tension continue régulant la tension continue en un point prédéterminé de ladite ligne, dispositif caractérisé par le fait qu'il comporte une branche (T3, T2, R) couplée entre les conducteurs de ladite ligne (L1, L2) et incluant la liaison de série d'un étage de sortie (C3) dudit circuit amplificateur (OOA8, T3) et d'une source de courant (T2, R) constituée par la liaison de série d'un premier transistor (T2) et d'une résistance (R) de détection du courant et faisant partie dudit circuit de régulation de la tension continue qui, en commandant le courant produit par ladite source de courant (T2, R), régule la tension continue audit point prédéterminé auquel ladite branche (T3, T2, R) est reliée, ladite source de courant (T2, R) faisant également partie d'un circuit (OA9/10/11, NM6) de synthèse d'une impédance-en courant alternatif qui, à partir de ladite résistance (R) de détection du courant, synthétise une impédance en courant alternatif qui constitue l'impédance de ladite source de courant (T2, R).

2. Dispositif de télécommunication selon la revendication 1, caractérisé par le fait que la liaison de série dudit haut-parleur (LS) et d'une première capacité (C7) est reliée en parallèle aux bornes dudit étage de sortie (T3), et par le fait que ledit circuit amplificateur (OA8, T3) comporte un premier amplificateur opérationnel (OA2) dont la sortie est reliée à l'entrée de commande d'un second transistor (T3) qui constitue ledit étage de sortie et dont le chemin de sortie est relié en parallèle avec ledit haut-parleur (LS) et avec ladite première capacité (C7).

3. Dispositif de télécommunication selon la revendication 2, caractérisé par le fait que ledit premier et ledit second transistors sont, respectivement, un transistor PNP (T2) et un transistor NPN (T3).

4. Dispositif de télécommunication selon la revendication 1, caractérisé par le fait que ledit circuit (OA9/10/11, Z1, NM6) comporte en outre: une seconde branche (Z1, C) qui est couplée en parallèle avec ladite branche mentionnée en premier lieu (T3, R, T2) et comprend la liaison de série d'une première impédance (Z1) et d'une seconde capacité (C), des premiers moyens (OA9/10) qui sont couplés avec ladite résistance (R) de détection du courant et sont capables de dériver, à partir du courant de ligne détecté, une tension continue de référence (V11) en fonction de laquelle ladite tension continue est régulée, et un circuit comparateur (OA11) dont la première entrée est couplée avec le point de jonction (VCC) de ladite première impédance (Z1) et de ladite seconde capacité (C), dont la seconde entrée est reliée à la sortie desdits premiers moyens (OA9/10) et dont la sortie (V15) est couplée à une entrée de commande dudit second transistor (T2).

5. Dispositif de télécommunication selon la revendication 4, caractérisé par le fait que ladite seconde capacité (C) est reliée en parallèle avec un diviseur de tension résistif (R36, R35) dont un point de prélèvement (V14) constitue ladite seconde entrée dudit circuit comparateur (OA11).

6. Dispositif de télécommunication selon la revendication 1, caractérisé par le fait que ledit circuit (OAO/10/11, NM6) de synthèse de l'impédance en courant alternatif comporte des seconds moyens (OA9/10) qui sont couplés entre ladite résistance de détection (R) et ledit premier transistor (T2) et sont capables de dériver, à partir du courant de ligne détecté, une tension alternative de régulation (V12), la sortie (V12) desdits seconds moyens (OA9/10) étant couplée avec une entrée de commande dudit premier transistor (T2).

7. Dispositif de télécommunication selon les revendications 4 et 6, caractérisé par le fait que lesdits premiers (OA9/10) et lesdits seconds (OA9/10) moyens sont communs audit circuit (OA9/10/11, Z1, NM6) de régulation de la tension continue et audit circuit (OA9/10/11, NM6) de synthèse de l'impédance en courant alternatif et sont constitués par la liaison de série d'un second circuit amplificateur de détection (OA9) qui est couplé avec ladite résistance de détection (R) et qui fournit à sa sortie la tension continue/alternative (V10) mesurée aux bornes de ladite résistance de détection (S), ainsi que par un troisième circuit amplificateur (OA10) qui fournit ladite tension continue de référence (V11) et ladite tension alternative de régulation (V12) à sa sortie (V11, V12), l'amplification de ladite tension continue de référence (V11) et de ladite tension alternative de régulation (V12) étant différentes.

8. Dispositif de télécommunication selon la revendication 7, caractérisé par le fait que la sortie (V11, V12) desdits premiers et desdits seconds moyens est couplée à l'entrée de commande dudit second transistor (T3) par l'intermédiaire dudit circuit comparateur (OA11) et d'un circuit inverseur (NM6).

9. Dispositif de télécommunication selon la revendication 8, caractérisé par le fait que ledit circuit inverseur est constitué d'un troisième transistor MOS à canal N-(NM6) dont le chemin drain-source est couplé entre l'entrée de commande dudit second transistor (C3) et l'autre conducteur (L2) de ladite ligne (L1, L2).

10. Dispositif de télécommunication selon la revendication 8, caractérisé par le fait que ledit troisième circuit amplificateur (OA10) comporte un second amplificateur opérationnel (OA10) aux entrées de changement de signe et de non-changement de signe duquel la sortie dudit second circuit amplificateur (OA9) est couplée par l'intermédiaire de la liaison en parallèle d'un circuit de série comprenant une première (R29) et une seconde (R30) résistances et d'une troisième résistance (R31), le point de jonction de ladite première (R29) et de ladite seconde (R30) résistances étant relié à l'autre conducteur (L2) de ladite ligne par l'intermédiaire d'une troisième capacité (C8), et par le fait que l'entrée de non-changement de signe dudit second amplificateur opérationnel est reliée à une seconde tension de référence (V) par l'intermédiaire d'une quatrième résistance (R32), tandis que son entrée de changement de signe est reliée à sa sortie par l'intermédiaire d'une cinquième résistance (R33).

11. Dispositif de télécommunication selon la revendication 1, caractérisé par le fait que ledit circuit émetteur (MC, DG, OA1/2/3/4) comporte un microphone électrodynamique (MIC) et un générateur de fréquences vocales (DG) qui sont couplés, par l'intermédiaire d'un quatrième (OA1) et d'un cinquième (OA2) circuits amplificateurs respectifs, à l'entrée de changement de signe d'un troisième amplificateur opérationnel (OA3) qui présente un circuit de rétroaction constitué par un premier circuit de filtrage (C3, R11).

12. Dispositif de télécommunication selon la revendication 11, caractérisé par le fait que ledit cinquième circuit amplificateur (OA2) est couplé à ladite entrée de changement de signe dudit troisième amplificateur opérationnel (OA3) par l'intermédiaire d'un second circuit de filtrage (R9/10, C2).